# EUROPEAN PATENT APPLICATION

(11) **EP 3 575 846 A1**
(43) Date of publication of application: **04.12.2019**
(21) Application number: 18175201.5
(22) Date of filing: 30.05.2018
(51) Int. Cl.: G02B 19/00, G02B 3/00, G02B 27/09, G02B 27/01, G02F 1/1335, H04N 9/31

(54) **PICTURE GENERATION UNIT FOR HEAD-UP DISPLAY**

(71) Applicant: Visteon Global Technologies, Inc., Van Buren Township, Michigan 48111 (US)
(72) Inventor: MATSUURA, Kazuya, Kanagawa, 235-0023 (JP); KAJIURA, Ryo, 76227 Karlsruhe (DE); LEDERMANN, Alexandra, 76547 Sinzheim (DE); HERVY, Sebastien, 60590 Trie-Chateau (FR); LIN, Chao-Hung, Canton, Michigan 48188 (US)
(74) Representative: MERH-IP Matias Erny Reichl Hoffmann Patentanwälte PartG mbB

(57) **Abstract**

One or more embodiments relate to a picture generation unit (1) for a head-up display. The picture generation unit (1) comprises an array of light-sources (2) for emitting beams of light, the light sources (2) being arranged in a matrix of Ly rows and Lx columns, an array of collimation lenses (3) for receiving said emitted beams of light, the collimation lenses (3) being arranged in a matrix of Ly rows and Lx columns; a micro lens array (4) for receiving light from the collimation lenses (3) and providing a focused light output, the micro lens array (4) arranged in a matrix of Fy rows and Fx columns, wherein Fx>2·Lx and Fy>2-Ly; a field lens array (6) for receiving said light from the micro lens array (4) and providing a collimated light output, the field lens array (6) arranged in a matrix of Lx rows and Ly columns; and an image generation unit (8) for receiving said collimated light output.

## Description

### TECHNICAL FIELD

One or more embodiments described herein relate to a picture generation unit (PGU) which can be operated in a head-up display (HUD). In particular, one or more embodiments may relate to a PGU for a HUD in a vehicle.

### BACKGROUND

A head-up display (HUD) allows projecting information directly into a user's field of view. Generally, a HUD comprise a picture generation unit (PGU), a series of mirrors, and either a transparent combiner screen or the windshield itself to project information directly in front of the operator's (i.e. the driver's or pilot's) eyes. For example, in a vehicle, a HUD can be used for projecting information above the dashboard, such as speedometer, tachometer, current radio station, indicators, navigation instructions and/or other information about the vehicle directly onto the windscreen of the vehicle, such that the driver can comfortably view the information without the need of having to look away from the road and without having to refocus his eyes onto the vehicle's instruments. A HUD therefore allows drivers to keep their eyes on the road without having to constantly shift their focus between the road and the instrument panel.

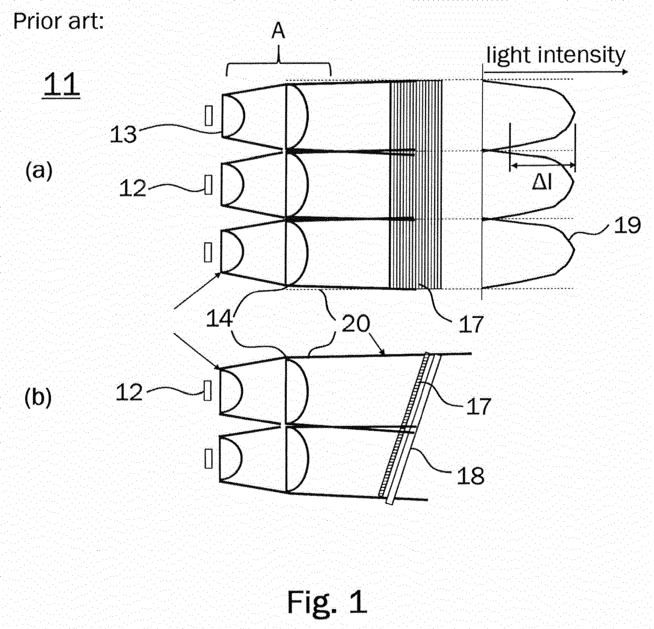

Fig. 1 shows an example of a conventional picture generation unit, PGU 11 according to the prior art. Fig. 1a is a top view of the PGU 11 and Fig. 1b is a side view of the PGU 11. The PGU 11 of the illustrated example comprises a two-dimensional array of six cells arranged in a matrix of three columns and two rows. Each cell comprises an LED 12 which is controllable as a light source for generating a light beam which is collimated using a collimation lens 13 and a field lens 14. A light box 20 is used to separate cells and avoid overlap of neighboring beams. The plurality of generated light beams is directed onto a diffuser 17 and a TFT-LCD 18. The light intensity profiles 19 of the light beams is illustrated on the right of Fig. 1a. The intensity profiles each have a nearly Gaussian distribution. Due to the intensity distribution, the light intensity at the borders between individual light beams is much smaller than the maximum intensity at the center of each beam. This leads to a noticeably large intensity difference ΔI between neighboring cells.

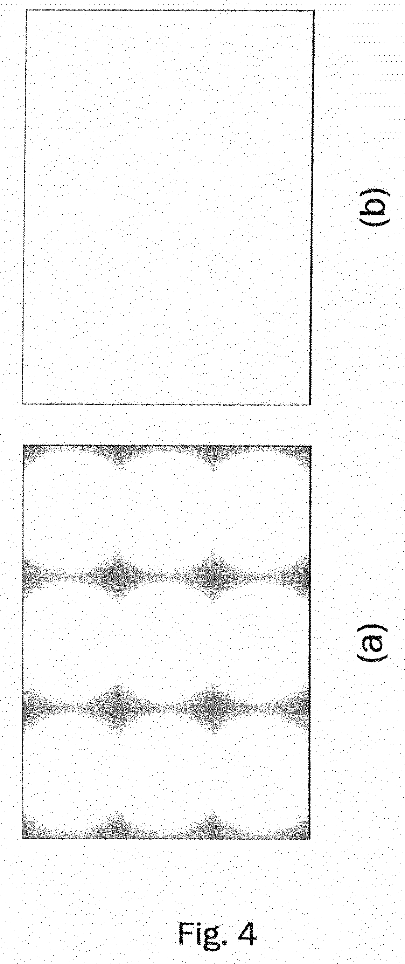

Fig. 4a shows an illustration of the resulting two-dimensional intensity distribution on the TFT-LCD 18. Visible borders, caused by the intensity difference ΔI can be seen around each cell. In order to avoid the visible borders around each cell, the light beams can be provided with an overlap. However, this will lead to deterioration of contrast between cells when a local dimming function is performed by selectively switching off LEDs of individual cells.

### BRIEF SUMMARY OF THE INVENTION

In orderto solve the problems described above, it is proposed to provide an improved picture generation unit (PGU). In particular, the improved PGU is configured to generate a homogenous light intensity distribution for each cell. Advantageously, the homogenous light intensity distribution can eliminate or at least significantly reduce visible boarders between cells.

According to an aspect, a PGU for a head-up display (HUD) is provided. The picture generation unit comprises an array of light-sources for emitting beams of light. The light sources which may be arranged in a matrix of Ly rows and Lx columns. Each light source is controllable to emit a beam of light. Preferably, each light source can be individually controlled to emit a beam of light with a predetermined luminance, such that a local dimming function can be implemented for increasing contrast of the generated image.

According to an aspect, the picture generation unit further comprises an array of collimation lenses operatively associated with the array of light sources for receiving said emitted beams of light. The collimation lenses may be arranged in a matrix of Ly rows and Lx columns, Lx and Ly being integers, such that for each light source one collimation lens is provided.

According to an aspect, the picture generation unit further comprises a micro lens array operatively associated with the array of collimation lenses for receiving light from the collimation lenses and providing a focused light output. The micro lens array may be arranged in a matrix of Fy rows and Fx columns, wherein Fx and Fy are integers which fulfil the conditions Fx>2·Lx and Fy>2·Ly, such that for each light source a plurality of at least four micro lenses may be provided.

Accordingto a preferred aspect, at least nine micro lenses may be provided in a three-by-three matrix for each light source. However, embodiments of the picture generation unit are not limited to the specifically stated amounts of micro lenses and other arrangements are possible, for example at least twelve micro lenses arranged in a three-by-four matrix or at least sixteen micro lenses arranged in a four-by-four matrix.

According to an aspect, the picture generation unit may further comprise a field lens array operatively associated with the micro lens array for receiving said light from the micro lens array and providing a formed light output. The field lens array may be arranged in a matrix of Ly rows and Lx columns, such that for each light source one field lens is provided. Moreover, an image generation unit is provided for receiving said formed light output.

According to a preferred aspect, a formed light output is provided by changing the divergence of the light beams. In particular, the divergence of the light beams may be increased or decreased by the field lens array. For example, collimated, nearly collimated, or even focused beams of light may be provided by the field lens array. In particular, a technical effect achieved by forming the light output may be to reposition the light beams, such that the light beams are (nearly) centered with regard to the cells. Furthermore, forming the light output may include shaping the light output. By forming the light output, the light beams may be redirected such that a very homogenous light intensity distribution may be obtained at the output of the picture generation unit.

Although the PGU according to one or more embodiments is described as particularly adapted for use with a HUD, for example in a vehicle, the PGU may also be utilized in numerous other applications, for example in a direct view liquid crystal display (LCD) system or in a video projector system.

According to an aspect, the light sources may be light-emitting diodes (LEDs) adapted to emit monochromatic light, for example red light and/or green light and/or blue light, or adapted to emit white light. However, the light sources are not limited to LEDs and any other kind of suitable light source including laser light sources may be utilized. Preferably, each light source may emit a beam of light with a Lambertian intensity profile. Preferably, the LEDs can be controlled by a control system which implements a local dimming function. For example, the LEDs can be individual controlled to emit a predefined luminance level. By means of the local dimming function, contrast of the image displayed by the HUD may be improved.

According to another aspect, the image generation unit may comprise a liquid-crystal display, preferably a thin-film-transistor liquid-crystal display (TFT-LCD). An advantage of using a TFT-LCD is that they can provide high-resolution images. Furthermore, it may be preferable that the image generation unit comprises a diffuser which may be arranged in front of the image generation unit. A preferred diffuser does not act as a depolarizer. In particular, a holographic diffuser may be used as the diffuser. A diffuser is used in order to provide even lighting.

According to yet another aspect, the picture generation unit may further comprise a polarization converter for converting non-polarized light of each beam of light into linearly polarized light, for example either p-polarized light or s-polarized light. Conventional light sources may emit non-polarized or randomly polarized light. By means of the polarization converter, the non-polarized or randomly polarized light can be efficiently converted into linearly polarized light such that transmission of light through the image generation unit may be optimized. The image generation unit may be configured to transmit only light of a certain linear polarization, for example, either p-polarized light or s-polarized light. By only directing polarized light of the correct polarization onto the image generation unit, transmission through the image generation unit can be maximized such that absorption of light by the image generation unit is minimized. This can reduce the amount of heat generated at and absorbed by the image generation unit. Especially in the case of high-power applications, reducing the amount of absorbed light in the image generation unit can considerably improve performance and/or lifetime of the image generation unit and may further eliminate or reduce the need for cooling of the image generation unit, thereby reducing complexity and costs of the picture generation unit.

According to an aspect, the polarization converter may be placed at or near a focal point of the micro lens array. In particular, according to a preferred aspect, the center of the polarization converter may be placed within a range of ±10% of the focal distance near the focal point of the micro lens array. Here, the term center of the polarization converter refers to the center in a thickness direction of an essentially flat polarization converter. The thickness direction will generally coincide with the direction of propagation of light through the polarization converter. By placing the polarization converter at or near the focal point of the micro lens array, the efficiency of the polarization converter can be optimized and the picture generation unit can be made more compact, light-weight, and efficient.

As a specific example, when Fx and/or Fy are small, for example each having a value of two, a polarization converter placed near the focal plane of the micro lens array could become relatively thick due to its internal structure. In such a case, it may be preferred to position a polarization film, such as brightness enhancement film (BEF) or dual brightness enhancement film (DBEF), between the array of collimation lenses and the micro lens array in order to improve the efficiency.

Accordingly, the picture generation unit may comprise a polarizer, for example a polarization filter or polarization film, for converting non-polarized light of each beam of light into linearly-polarized light. Preferably, the polarization filter is placed at a position between the array of collimation lenses and the micro lens array.

According to an aspect, Fx=3·Lx and/or Fy=3-Ly, in other words, for each light source, an array of three by three micro lenses is provided in the micro lens array. The integer values of Fx and/or Fy can be larger than three and do not have to be equal. Other suitable integer values of Fx and Fy may include any combination of values between, for example, four and ten.

According to yet another aspect, the image generation unit may be arranged obliquely with regard to a direction of propagation of the light beams. Here, the term obliquely means that the essentially planar image generation unit is not arranged orthogonal to the direction of propagation of the light beams but with a small angle. By arranging the image generation unit obliquely, it can be advantageously prevented that sunlight is reflected into the driver's eyes.

When the image generation unit is arranged obliquely, a distance between the image generation unit and the collimation lenses may vary, such that the focal length of each field lens of the field lens array may be set according to the distance of the field lens to the image generation unit. Alternatively, the focal length of the micro lenses may be set according to the distance between the micro lens array and the image generation unit. The positions of the polarization converter and the field lenses may be adapted accordingly.

According to another aspect, the picture generation unit may be operated to perform a local dimming function. The local dimming function includes that individual light sources providing light to illuminate certain areas on the image generation unit which are currently adapted to display darker areas are controlled to reduce light emission or completely switch off. By means of the local dimming function, a total energy consumption of the picture generation unit can be reduced and heat transfer to the image generation unit can be decreased. Furthermore, the contrast in the displayed image may be improved since darker pixels may be obtained. In particular, the local dimming function may be implemented dynamically such that a high dynamic range is achieved when displaying moving images.

### BRIEF DESCRIPTION OF THE DRAWINGS

Fig. 1 schematically illustrates a conventional picture generation unit.
Fig. 2 schematically illustrates a first exemplary embodiment of a picture generation unit.
Fig. 3 schematically illustrates a second exemplary embodiment of a picture generation unit.
Fig. 4 schematically shows a two-dimensional intensity distribution of a conventional picture generation unit (Fig. 4a) and of a picture generation unit (Fig. 4b).

### DETAILED DESCRIPTION OF EMBODIMENTS

A picture generation unit (PGU) according to one or more embodiments can be operated in a head-up display (HUD). In particular, a PGU for a HUD according to one or more embodiments may be utilized in a vehicle such as an automobile. Indications are given throughout the specification to preferred and alternative embodiments, including the application of various aspects of the invention to HUDs used in vehicles. It should, however, be understood that the following detailed description is illustrative, rather than limiting, and that the embodiments described herein are not limited to automotive applications.

Fig. 1 illustrates an example of a picture generation unit (PGU) 11 according to the prior art. The achieved light intensity distribution with relatively large intensity differences at the boarders is illustrated at the right of Fig. 1a and as a two-dimensional intensity distribution in Fig. 4a. The present embodiment aims at providing a more homogenous intensity distribution in order to reduce the intensity difference at the boarders between cells.

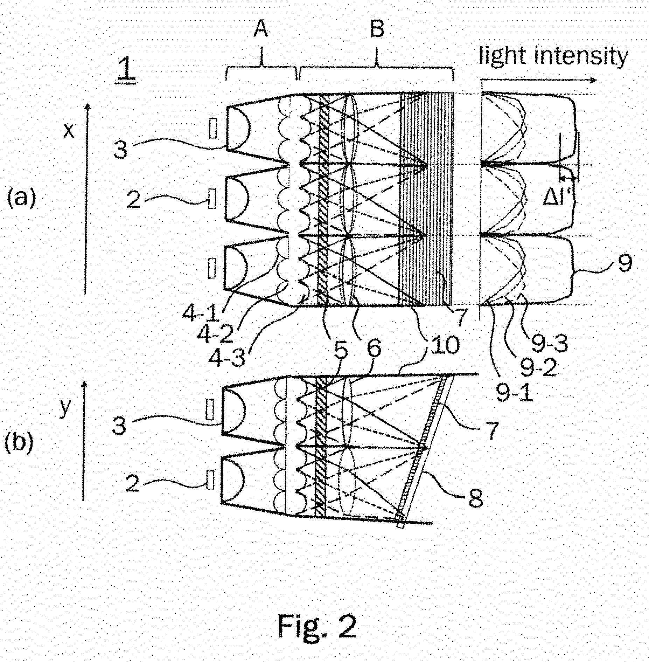

Fig. 2 schematically illustrates a first exemplary embodiment of a PGU 1. Fig. 2a shows a top view of the PGU 1 and Fig. 2b shows a side view of the PGU 1. The PGU 1 may be utilized for a HUD.

PGU 1 comprises an array of high-power light-emitting diodes LEDs 2 arranged in a matrix of two rows and three columns to provide backlighting with high brightness for an image generation unit 8. A row extends along a (horizontal) direction x indicated by the arrow labeled x in Fig. 2a and a column extends along a (vertical) direction y indicated by the arrow labeled y in Fig. 2b. In alternative embodiments the number of rows can be any integer Ly larger than two and the number of columns can be any integer Lx larger than three. Each LED 2 is controllable to emit a beam of light. The LEDs 2 can be controlled by suitable driving electronics. For example, each LED 2 can be switched on and off or controlled to emit light of a specified intensity up to its maximum intensity. By controlling the LEDs, a dimming function can be performed. A known method of controlling the brightness of each of the LEDs implements pulse-width modulation where the intensity of the LEDs is kept constant, but the brightness adjustment is achieved by varying a time interval of flashing these constant light intensity LEDs.

The LEDs 2 may be adapted to emit monochromatic light, for example red light, green light, or blue light, or a combination thereof, or they can be adapted to emit white light. However, embodiments of the PGU are not limited to the use of LEDs and any other kind of suitable light source, for example a laser source such as laser diodes may be utilized. Preferably, the LEDs 2 are configured to emit a beam of light with a Lambertian intensity profile.

PGU 1 further comprises an array of collimation lenses 3 operatively associated with the array of LEDs 2 for receiving said emitted beams of light. For each LED 2 one collimation lens 3 is provided. Accordingly, in the present embodiment, the collimation lenses 3 are arranged in a matrix of two rows by three columns.

PGU 1 further comprises a micro lens array 4 operatively associated with the array of collimation lenses 3 for receiving light from the collimation lenses 3 and for providing a focused light output. For each LED 2, a plurality of micro lenses 4 is provided. In the present embodiment, the micro lens array 4 is arranged in a matrix of six rows by nine columns, such that for each LED 2, nine micro lenses 4 are provided.

In the illustration of Fig 2, the light path after the micro lens array 4 for each LED 2 is indicated by a solid line, a dotted line, and a dashed line, respectively. On the right of Fig. 2a, the corresponding intensity profile for each light component is also illustrated using a solid line, a dotted line, and a dashed line. In Fig. 2a, the micro lenses corresponding to the intensity profiles 9-1, 9-2, and 9-3 are labeled 4-1, 4-2, and 4-3. The sum of the intensity components is an intensity distribution having a top-hat shape. Thus, a very homogenous intensity distribution can be achieved by using the micro lens array 4. The difference of intensity ΔI' between neighboring cells can thus be much smaller than in the case of the conventional PGU.

PGU 1 further comprises a field lens array 6 operatively associated with the micro lens array 4 for receiving said focused light from the micro lens array 4 and providing a formed light output. For each LED 2 one field lens 6 is provided. Accordingly, in the present embodiment, the field lens array 6 is arranged in a matrix of two rows by three columns. Moreover, a thin-film-transistor liquid-crystal display, TFT-LCD, 8 is provided for receiving said formed light output. An example of a resulting two-dimensional intensity distribution as received by the TFT-LCD 8 is illustrated in Fig. 4b. In particular, the filed lens array 6 forms the light output by redirecting the light beams, such that a homogeneous light distribution is obtained at the diffuser 7.

A polarization converter 5 for converting non-polarized light of each beam of light into either p-polarized light or s-polarized light is provided between the micro lens array 4 and the field lens array 6. In particular, the center of the polarization converter 5 is placed within a range of ±10% of the focal distance of the micro lens array 4 near a focal point of the micro lens array 4. In other words, the polarization converter 5 is placed near a focal plane of the micro lens array 4.

Conventional LEDs 2 emit non-polarized or randomly polarized light. By means of the polarization converter 5, the non-polarized or randomly polarized light can be converted into linearly polarized light such that transmission of light through the TFT-LCD 8 may be maximized. Polarization converters known in the art can achieve efficiencies of converting non-polarized light into linearly polarized light of 75% to 80%. Such polarization converters can have an internal structure comprising an array of polarizing beam splitters combined with a retarder plate such as a half-wave plate made of a birefringent material. Additionally, anti-reflecting coatings may be provided on either or both sides of the polarization converter.

As a specific example, when Fx and/or Fy are smaller than in the present embodiment, for example Fx and Fy each having a value of two, a polarization converter which would be placed near the focal plane of the micro lens array could become relatively thick due to its internal structure. In such a case, a polarization filter may be used instead of the polarization converter. For example, in an alternative embodiment (not depicted) a polarization film, such as brightness enhancement film (BEF) or dual brightness enhancement film (DBEF), may be placed between the array of collimation lenses and the micro lens array. Such a configuration may improve the efficiency.

The TFT-LCD 8 may be configured to transmit only light of a certain linear polarization, for example, either p-polarized light or s-polarized light. For example, the polarization may be oriented along either direction x or y. By only directing linearly polarized light of the correct polarization onto the TFT-LCD 8, transmission through the TFT-LCD 8 can be maximized such that absorption and/or reflection of light by the TFT-LCD 8 is minimized. This can reduce the amount of heat generated at the TFT-LCD 8. Especially in the case of high-power applications, reducing the amount of absorbed light in TFT-LCD 8 can considerably improve performance and/or lifetime of the TFT-LCD 8 and may further reduce the need for cooling of TFT-LCD 8.

The TFT-LCD 8 comprises a diffuser 7 which is arranged in front of the TFT-LCD 8. The diffuser 7 is configured not to depolarize the light beams. In particular, a holographic diffuser (for example a holographic light shaping diffuser) may be used as the diffuser 7.

As can be seen in the illustration of Fig. 2b, the TFT-LCD 8 and the diffuser 7 are arranged obliquely with regard to a direction of propagation of the light beams. The term obliquely means that the essentially planar TFT-LCD 8 and diffuser 7 are not arranged orthogonal to the direction of propagation of the light beams but with a small angle of approximately 20 degrees. Since the TFT-LCD 8 is arranged with a small angle, a distance between the TFT-LCD 8 and the collimation lenses 6 may vary as depicted in Fig. 2b. In order to compensate for the varying distance, the focal length of each field lens 6 of the field lens array is set according to the distance of the field lens 6 to the TFT-LCD 8. For example, the focal length of the field lenses 6 of the upper row of Fig. 2b is larger than the focal length of the field lenses 6 of the lower row of Fig. 2b.

In a preferred embodiment, the angle of the TFT-LCD 8 and diffuser 7 with respect to the direction of propagation of the light beams is choses such, that when the PGU 1 is installed in a HUD of a vehicle, a reflection of sunlight into the driver's eyes can be prevented.

PGU 1 further comprises a light-box 10 which is utilized as is well-known in the art. Such a light-box 10 may be typically made from aluminum but can be manufactured from any suitable metallic or plastic material which can be coated with a reflective coating if needed.

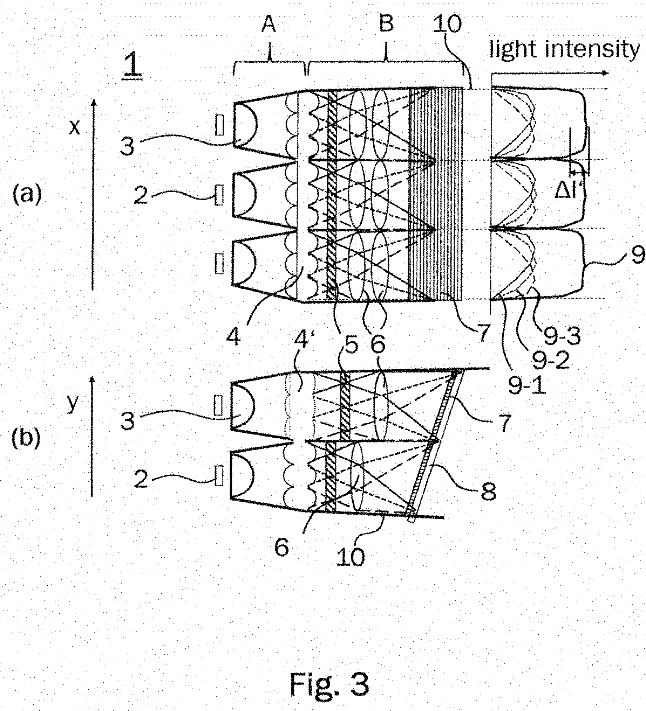

Fig. 3 schematically illustrates a second exemplary embodiment of a PGU 1. Fig. 3a shows a top view of the PGU 1 and Fig. 3b shows a side view of the PGU 1. The PGU 1 may be utilized for a HUD in a vehicle. Features of the second embodiment which are similar or identical to features of the first embodiment are denoted with identical reference signs. A description of features of the second embodiment which are identical to features of the first embodiment will be omitted.

The PGU 1 according to the second embodiment differs from the first embodiment described above with reference to Fig. 2 in that instead of varying the focal lengths of the field lenses 6, the focal lengths of the micro lenses 4 are varied. As can be seen for example in the illustration of Fig. 3b, the focal lengths of the micro lenses 4' of the top row, illustrated with a dotted outline, are larger than the focal length of the micro lenses 4 of the bottom row, illustrated with a solid outline. This difference in focal lengths is used in order to compensate for a difference in distance between the micro lenses and the TFT-LCD 8. The positon of the field lenses 6 is adjusted accordingly as illustrated in Fig. 3. Furthermore, the polarization converter 5 is positioned near a focal point of the micro lenses 4. As can be seen in Fig. 3b, the polarization converter 5 of the top row is positioned a little further away from the micro lens array 4' than the polarization converter 5 of the bottom row.

By means of varying the focal distance of the micro lens array 4 and shifting the position of the field lens array 6, a very homogenous optical intensity distribution can be achieved. The variation of focal lengths of the micro lenses 4 can be made such that the difference in distance due to the oblique arrangement of the TFT-LCD 8 can be compensated. In comparison with the variation of the focal lengths of the field lenses 6 according to the first embodiment, the variation in focal length of the micro lenses 4 can be made with smaller graduation. Thus, an improved homogeneity of the intensity distribution can be achieved.

Fig. 4a shows an illustration of a two-dimensional intensity distribution of a conventional picture generation unit corresponding to the example depicted in Fig. 1 and Fig. 4b shows an illustration of a two-dimensional intensity distribution of a picture generation unit according to embodiments as depicted in Figs. 2 and 3. As can be seen in Fig. 4, a very uniform intensity distribution can be achieved with the picture generation unit according to the embodiments.

The features described in the above description, claims and figures can be relevant to embodiments in any combination. Their reference numerals in the claims have merely been introduced to facilitate reading of the claims. They are by no means meant to be limiting.

Throughout this specification various indications have been given as to preferred and alternative embodiments of the invention. However, it should be understood that the embodiments of invention are not limited to any one of these. It is therefore intended that the foregoing detailed description be regarded as illustrative rather than limiting, and that it be understood that it is the appended claims, including all equivalents, that are intended to defined the sprit and scope of this invention.

## Claims

1. Picture generation unit (1) for a head-up display comprising:
an array of light-sources (2) for emitting beams of light, the light sources (2) being arranged in a matrix of Ly rows and Lx columns,;
an array of collimation lenses (3) for receiving said emitted beams of light, the collimation lenses (3) being arranged in a matrix of Ly rows and Lx columns;
a micro lens array (4) for receiving light from the collimation lenses (3) and providing a focused light output, the micro lens array (4) being arranged in a matrix of Fy rows and Fx columns, wherein Fx>2·Lx and Fy>2·Ly;
a field lens array (6) for receiving said light from the micro lens array (4) and providing a formed light output, the field lens array (6) being arranged in a matrix of Ly rows and Lx columns; and
an image generation unit (8) for receiving said formed light output.

2. Picture generation unit (1) according to claim 1, wherein the light sources (2) are light-emitting diodes (LEDs).

3. Picture generation unit (1) according to claim 1 or claim 2, wherein each light source (2) emits a beam of light with a Lambertian intensity profile.

4. Picture generation unit (1) according to at least one of the preceding claims, wherein the image generation unit (8) is a thin-film-transistor liquid-crystal display (TFT-LCD).

5. Picture generation unit (1) according to at least one of the preceding claims, further comprising a polarization converter (5) for converting non-polarized light of each beam of light into linearly-polarized light

6. Picture generation unit (1) according to claim 5, wherein the polarization converter (5) is placed near a focal point of the micro lens array (4).

7. Picture generation unit (1) according to claim 6, wherein the center of the polarization converter (5) is placed within a range of ±10% of the focal distance of the micro lens array (4) near the focal point of the micro lens array.

8. Picture generation unit (1) according to at least one of the preceding claims, wherein the image generation unit (8) is arranged obliquely with regard to an axis of propagation of the light beams.

9. Picture generation unit (1) according to claim 8, wherein the focal length of each field lens of the field lens array (6) is set according to a distance of the field lens to the image generation unit (8).

10. Picture generation unit (1) according to at least one of the preceding claims, wherein the image generation unit (8) comprises a diffuser (7).

11. Picture generation unit (1) according to at least one of the preceding claims, wherein the array of light sources (2) is operable to perform a local dimming function by selectively controlling the amount of light emitted by each light source (2).

12. Picture generation unit (1) according to at least one of claims 1 to 4, further comprising a polarization filter (5) for converting non-polarized light of each beam of light into linearly-polarized light.

13. Picture generation unit (1) according to claim 12, wherein the polarization filter (5) is placed at a position between the array of collimation lenses (3) and the micro lens array (4).
